# FASCICULE DE BREVET EUROPEEN

(11) **EP 0 983 881 B1**
(45) Date de publication et mention de la délivrance du brevet: **08.11.2000**
(21) Numéro de dépôt: 98440193.5
(22) Date de dépôt: 03.09.1998
(51) Int. Cl.: B60G 11/16, F16F 1/12

(54) **Suspension de roue pour véhicule**
Radaufhängung für ein Fahrzeug
Wheel suspension for a vehicle

(43) Date de publication de la demande: 08.03.2000
(73) Titulaire: Gaussin SA, 70400 Héricourt (FR)
(72) Inventeur: Cramatte, Olivier, 90140 Bourogne (FR)
(74) Mandataire: Rhein, Alain

(56) Documents cités:
- EP-A- 0 026 131
- DE-C- 3 839 433
- FR-A- 328 974
- FR-A- 670 188
- FR-A- 709 406
- US-A- 4 344 643

## Description

L'invention concerne une suspension de roue pour véhicule, en particulier pour véhicule de type remorque à essieu directeur pour le transport de charges lourdes, comprenant un bras support d'essieu s'étendant vers l'avant ou l'arrière du véhicule, ce bras, d'une part, étant monté pivotant, à l'une de ses extrémités, sur une chape rapportée sur une structure support de l'organe directeur de l'essieu et, d'autre part, coopérant, plus particulièrement par l'intermédiaire de son extrémité opposée, avec des moyens amortisseurs s'interposant entre ce bras et ladite structure support.

La présente invention concerne, plus particulièrement, le domaine des véhicules de transport de type remorque à essieu directeur.

A ce propos, l'on remarquera qu'il est très fréquent de rencontrer sur les zones portuaires ou aéroportuaires des véhicules à train de remorques, ces dernières étant montées sur des essieux directeurs et reliées entre elles par des moyens d'articulation constituant des moyens de commande d'orientation de ces essieux directeurs en vue d'un déplacement du type monotrace du train.

Pour l'heure les roues de telles remorques sont rarement suspendues ce qui pose problème pour le transport de charges lourdes dans la mesure où le franchissement d'obstacles au niveau de la chaussée se traduit par d'énormes contraintes, tant au niveau de la remorque que du chargement lui-même. Or, l'on a pu constater que les terrains sur lesquels ce type de train de remorques à système de suivi monotrace est amené à évoluer présentent de plus en plus d'imperfections, tandis que la taille des remorques et le poids des charges transportées ont tendance, elles à augmenter de plus en plus.

Dans ce contexte, l'on a, dès à présent, imaginé de faire appel à des ressorts à lames pour suspendre les roues de telles remorques ce qui présente quelques inconvénients.

Tout d'abord ces ressorts à lames sont d'un encombrement non négligeable et imposent le rehaussement du plateau de chargement de ces remorques.

De plus, leur débattement est relativement important et entraîne une hauteur de timon d'attelage variable selon que la remorque est ou non chargée. Dans ces conditions, il est particulièrement difficile d'envisager la possibilité d'atteler ou encore de désatteler automatiquement les remorques les unes par rapport aux autres. Or, précisément, il faut pouvoir mener à bien ces opérations sans qu'il ne soit nécessaire au conducteur de descendre de son véhicule tracteur. A noter que pour permettre, précisément, un tel désaccouplement et, inversement, l'attache automatique de ces remorques, celles-ci sont pourvues, à hauteur de leur essieu avant d'une barre de timon sur laquelle agit un système autocompensateur de son poids permettant de la maintenir systématiquement à l'horizontale. Par ailleurs, l'attache que reçoit l'essieu directeur arrière est munie d'une gueule de loup facilitant l'engagement, au niveau de cette attache, de l'extrémité libre de la barre de timon de la remorque suivante.

A côté de cela on connaît également des systèmes de suspension de roue consistant en un bras support d'essieu s'étendant sensiblement vers l'avant ou, selon le cas, vers l'arrière du véhicule et dont une extrémité est montée pivotante sur une chape rendue solidaire du châssis dudit véhicule. Entre ce bras, auquel est, par conséquent, fixé l'essieu recevant les roues à ses extrémités, et ledit châssis du véhicule sont encore interposés des moyens amortisseurs sous forme d'un ressort directement rendu solidaire à ses extrémités à ce bras et du châssis. De tels moyens amortisseurs peuvent encore se présenter sous forme d'un cylinbloc ou d'un système pneumatique ou oléopneumatique.

A ce propos, si la solution du cylinbloc n'est pas adaptée pour le transport de charges lourdes, tandis qu'un système de type pneumatique nécessite l'implantation sur le véhicule d'une grande réserve d'air en raison du différentiel important entre le poids à vide et le poids total en charge, un ressort du type hélicoïdal dont les extrémités sont fixées sur le bras support d'essieu et au niveau du châssis du véhicule, est amené à agir, non seulement, en compression, mais également en flexion. Non seulement ceci amène les pièces mécaniques de la suspension à travailler dans de mauvaises conditions mais encore dans le cas d'un essieu directeur une telle suspension peut avoir une influence sur l'orientation de cet essieu ce qui vient contrecarrer le bon fonctionnement du suivi monotrace d'un train de remorque.

La présente invention se veut par conséquent à même d'apporter une solution au problème précité.

A cet effet, l'invention concerne une suspension de roue pour véhicule, en particulier pour véhicule de type remorque à essieu directeur pour le transport de charges lourdes, comprenant un bras support d'essieu s'étendant vers l'avant ou l'arrière du véhicule, ce bras, d'une part, étant monté pivotant, à l'une de ses extrémités, sur une chape rapportée sur une structure support de l'organe directeur de l'essieu et, d'autre part, coopérant, plus particulièrement par l'intermédiaire de son extrémité opposée, avec des moyens amortisseurs venant s'interposer entre ce bras et ladite structure support et consistant en un ressort hélicoïdal prévu apte à agir exclusivement en compression sur l'action de moyens qui en assurent le maintien et le guidage se présentant sous forme de deux pièces de nature emboîtable tout en étant en mesure de coulisser l'une dans l'autre dans le sens axial au ressort, contre l'action de ce dernier, ces pièces étant montées pivotantes autour d'un axe parallèle à l'essieu, respectivement, pour l'une sur ledit bras support d'essieu et pour l'autre sur ladite structure support et, d'autre part, un essieu est fixé sur un bras support de manière à se situer sensiblement sur l'axe vertical de pivotement de l'organe directeur de cet essieu.

Selon une autre particularité de la présente invention, le bras support d'essieu comporte des moyens de réception et de fixation de l'essieu, tenant compte, à ce propos, que ces moyens de fixation peuvent être rapportés à une distance déterminée de l'extrémité pivotante dudit bras support en fonction de l'amplitude du débattement que doit permettre une telle suspension à une roue.

Les avantages découlant de la présente invention consistent en ce que pour répondre au problème posé on se contente de faire appel à un ressort hélicoïdal et non à un système pneumatique nécessairement plus encombrant, tout en évitant que ce ressort agisse autrement qu'en compression ce qui, dans le cas contraire, a pour conséquence de mettre sous contrainte les éléments de la suspension, voire d'influencer l'orientation des roues, difficultés qui n'auraient pu être surmontées autrement qu'en faisant appel à des moyens mécaniques de retenue du bras support fort complexes et, bien sûr, onéreux.

D'autres buts et avantages de la présente invention apparaîtront au cours de la description qui va suivre accompagnée des dessins en annexe correspondant à un exemple de réalisation.
- La figure 1 est une représentation schématisée en perspective et de dessous d'un véhicule du type remorque à essieux directeurs.
- La figure 2 est une vue schématisée en élévation d'une suspension conforme à l'invention.
- La figure 3 est une représentation schématisée et en élévation des deux suspensions correspondant à chacune des roues d'un essieu et venant se fixer sous l'organe directeur, en l'occurrence, ici, une couronne à bille.

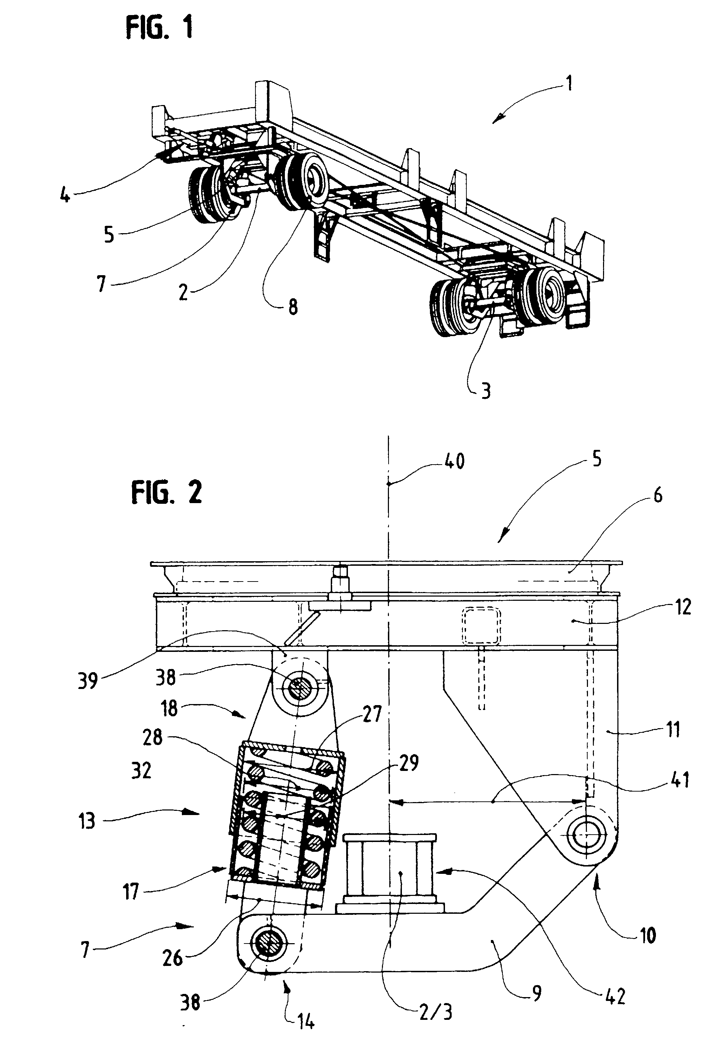

Tel que représenté dans la figure 1 en annexe, la présente invention concerne, plus particulièrement, le domaine des véhicules du type remorque 1 à essieux 2, 3 directeurs pour le transport de charges lourdes.

En fait, il a tout particulièrement été représenté dans cette figure 1 une remorque dont, à la fois, l'essieu avant 2 et l'essieu arrière 3 sont directeurs et reliés entre eux, mécaniquement, hydrauliquement ou pneumatiquement pour un pivotement synchrone de ces essieux. Leur orientation est commandée par l'intermédiaire des moyens d'articulation 4 qui sont à même d'assurer la liaison d'une telle remorque à un véhicule tracteur ou à une autre remorque ceci pour un déplacement de type monotrace du train de véhicule ainsi constitué.

Comme visible encore sur cette figure 1, l'organe directeur 5 de ces essieux 2, 3 est défini, ici, par une couronne à bille 6 plus particulièrement représentée dans les figures suivantes 2 et 3.

A ce propos, l'invention consiste en une suspension 7 de roue 8 pour ce type de véhicule de transport. Cette suspension 7 comporte un bras support d'essieu 9 s'étendant, selon le cas, vers l'avant ou l'arrière du véhicule 1 tout en étant monté pivotant, à l'une de ses extrémités 10, au niveau d'une chape 11 qui elle est rapportée sur la structure support 12 de l'organe directeur 5, plus particulièrement de la couronne à billes 6.

Ce bras support 9 est encore amené à coopérer avec des moyens amortisseurs 13, ceux-ci venant s'interposer entre ce bras 9 et ladite structure support 12. Préférentiellement, le bras support 9 agit sur ces moyens amortisseurs 13, à hauteur de son extrémité 14, opposée à celle 10 montée pivotante sur la chape 11.

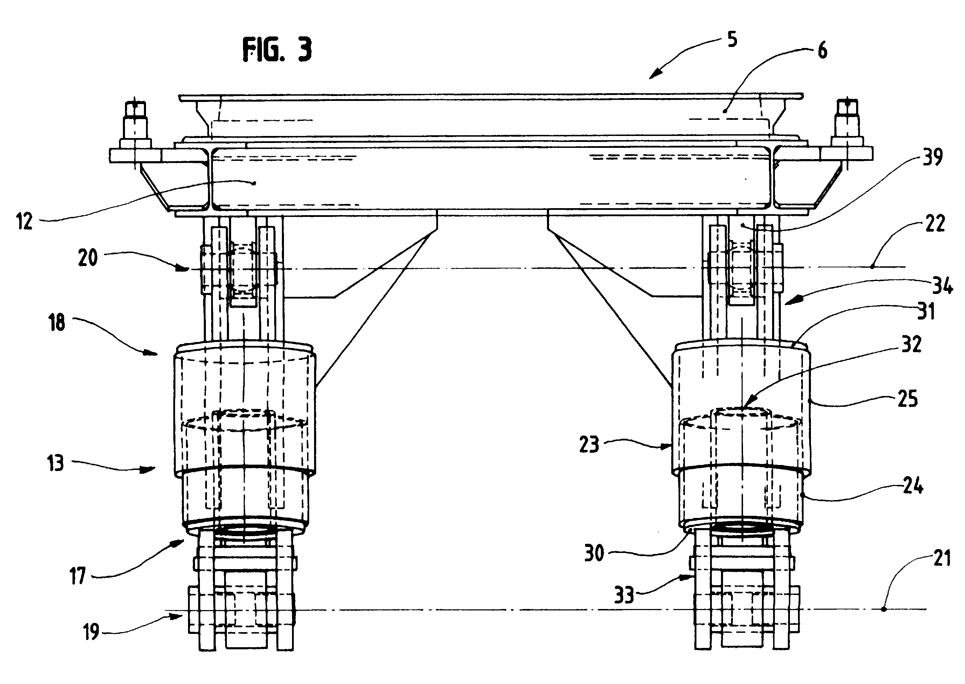

Selon une particularité de la présente invention, les moyens amortisseurs 13 consistent en un ressort hélicoïdal 15, représenté schématiquement dans les figures 2 et 3, ce ressort 15 étant prévu apte à agir exclusivement en compression sous l'action de moyens 16 qui en assurent le maintien et le guidage. De tels moyens 16 consistent, substantiellement, en deux pièces 17, 18 de nature emboîtable tout en étant à même de coulisser l'une dans l'autre dans le sens axial au ressort hélicoïdal 15, contre l'action de ce dernier. Ces pièces 17, 18 sont par ailleurs montées de manière pivotante à l'aide de moyens d'articulation 19, 20, autour d'un axe 21, 22 parallèle à l'essieu 2, respectivement, sur ledit bras 9 et sur ladite structure support 12 correspondant à la couronne à billes 6.

Selon un mode de réalisation préférentiel illustré dans les figures 2 et 3, ces pièces 17, 18, emboîtables et coulissantes l'une par rapport à l'autre, définissent une boîte 23 pour la réception du ressort 15 en vue d'en assurer, précisément, le maintien et le guidage. Tout particulièrement, chacune de ces pièces 17, 18 comporte une partie tubulaire 24, 25, de forme cylindrique et refermée par un fond 30, 31, l'une 24 d'entre elles présentant une section externe 26 ajustée à celle interne 27 de l'autre partie tubulaire 25, la section interne 28 de la partie tubulaire 24 étant encore ajustée au diamètre 29 du ressort hélicoïdal 15. A noter que cet ajustement tient compte de l'expansion en diamètre que peut subir un tel ressort lors de sa compression sous l'influence du poids du chargement apte à être déposé sur la remorque 1.

Finalement, ce maintien et le guidage du ressort hélicoïdal 15 pour s'assurer qu'il ne peut agir qu'en compression peut encore être complété par un embout tubulaire 32 s'étendant axialement depuis le fond 30, 31 et à l'intérieur de la partie tubulaire 24 et/ou 25 d'au moins une des pièces 17, 18, cet embout tubulaire 32 étant défini de section externe ajustée à l'évidement interne dudit ressort hélicoïdal 15.

A ce propos, si, dans le cadre du mode de réalisation précédemment décrit, le maintien et le guidage du ressort hélicoïdal 15 est assuré extérieurement à ce dernier ce qui présente l'avantage d'emprisonner parfaitement ce ressort 15 et d'en assurer, ainsi, la protection à l'égard d'agents corrosifs externes par exemple ou encore pour éviter tout accident par coincement, ce maintien et ce guidage dudit ressort 15 peut également être obtenu par l'intermédiaire de parties tubulaires emboîtables et coulissantes l'une par rapport à l'autre s'étendant intérieurement à ce ressort hélicoïdal 15 et de section ajustée à l'évidement de ce dernier.

Plus particulièrement, l'une des parties tubulaires présente, dans ces conditions, une section externe ajustée, précisément, à cet évidement du ressort hélicoïdal 15, tandis que l'autre partie tubulaire est, elle, de section ajustée à celle interne de la partie tubulaire à laquelle il a été fait référence précédemment. Dans une telle conception ledit ressort hélicoïdal 15 vient prendre appui sur des flasques d'appui s'étendant sous les différentes parties tubulaires.

Quant aux moyens d'articulation 19, 20 reliant les pièces 17, 18, selon le cas, au bras support 9 ou à la structure support 12, ils sont définis par des chapes 33, 34 s'étendant depuis le fond 30, 31 des parties tubulaires 24, 25 et portant un axe 38 sur lequel est montée pivotante, selon le cas, l'extrémité 14 du bras support 9 ou une pâte à oeillet 39 rapportée sur la structure support 12 de la couronne à billes 6.

A noter, à ce propos, que de telles suspensions 7 conformes à l'invention sont rapportées sous la structure support 12 de l'organe directeur 5 en l'occurrence, ici, sur la couronne à billes 6, de manière symétrique par rapport au plan médian longitudinal de la remorque 1. Par ailleurs, l'essieu 2 est, lui, fixé sur les bras supports 9 de ces suspensions 7 de manière à se situer, d'une part, sensiblement, sur l'axe vertical de pivotement 40 de l'organe directeur 5 et, d'autre part, à une distance 41 de l'extrémité pivotante 10 du bras support 9 déterminé en fonction du débattement que l'on souhaite conférer aux roues 8 par l'intermédiaire de ces suspensions 7.

La fixation d'un essieu 2, 3 sur lesdits bras supports 9 est obtenue par l'intermédiaire de brides 42 équipant cette dernière à cet effet.

Finalement tel que cela ressort de la description qui précède, la suspension, conforme à l'invention, permet de répondre avantageusement au problème initialement posé, à savoir qu'elle présente un encombrement réduit, elle autorise un débattement limité aux roues 8 des essieux directeurs 2, 3 et, surtout, elle fait appel à une technologie simplifiée, soit un simple ressort hélicoïdal dont l'action est contrôlée pour qu'il n'intervienne qu'en compression évitant que les différents organes composant une telle suspension travaillent dans de mauvaises conditions.

## Revendications

1. Suspension de roue (8) pour remorque (1) à essieux directeurs (2, 3) pour le transport de charges lourdes, comprenant un bras support d'essieu (9) s'étendant vers l'avant ou l'arrière de la remorque (1), ce bras (9), d'une part, étant monté pivotant, à l'une (10) de ses extrémités, sur une chape (11) rapportée sur une structure support (12) de l'organe directeur (5) de l'essieu (2, 3) et, d'autre part, coopérant, par l'intermédiaire de son extrémité opposée (14), avec des moyens amortisseurs (13) venant s'interposer entre ce bras (9) et ladite structure support (12), caractérisée par le fait que, d'une part, lesdits moyens amortisseurs (13) consistent en un ressort hélicoïdal (15) prévu apte à agir, exclusivement, en compression sous l'action de moyens (16) qui en assurent le maintien et le guidage se présentant sous forme de deux pièces (17, 18) de nature emboîtable tout en étant en mesure de coulisser l'une dans l'autre dans le sens axial au ressort (15), contre l'action de ce dernier, ces pièces (17, 18) étant montées pivotantes autour d'un axe (21, 22) parallèle à l'essieu (2, 3), respectivement, pour l'une (17), sur ledit bras support d'essieu (9) et, pour l'autre (18), sur ladite structure support (12) et, d'autre part, un essieu (2, 3) est fixé sur un bras support (9) de manière à se situer sensiblement sur l'axe vertical de pivotement (40) de l'organe directeur (5) de cet essieu (2, 3).

2. Suspension selon la revendication 1, caractérisée par le fait que les pièces (17, 18) définissent une boîte (23) pour la réception du ressort (15) en vue d'en assurer le maintien et le guidage, chacune de ces pièces (17, 18) comportant une partie tubulaire (24, 25) de forme cylindrique et refermée par un fond (30, 31), l'une (24) d'entre elles présentant une section externe (26) ajustée à celle interne (27) de l'autre partie tubulaire (25), la section interne (28) de la partie tubulaire (24) étant encore ajustée au diamètre (29) du ressort hélicoïdal (15).

3. Suspension selon la revendication 2, caractérisée par le fait que lesdits moyens (16) sont complétés par un embout tubulaire (32) s'étendant axialement depuis le fond (30, 31) et à l'intérieur de la partie tubulaire (24) et/ou (25) d'au moins une des pièces (17, 18), cet embout tubulaire (32) étant défini de section externe ajustée à l'évidement interne dudit ressort hélicoïdal (15).

4. Suspension selon la revendication 1, caractérisée par le fait que les pièces (17, 18) comportent une partie tubulaire, l'une présentant une section externe ajustée à l'évidement interne du ressort hélicoïdal (15), tandis que l'autre partie tubulaire est, elle, de section ajustée à celle interne de la partie tubulaire précédente, le ressort hélicoïdal (15) venant prendre appui sur des flasques d'appui s'étendant sous chacune des parties tubulaires.

5. Suspension selon l'une quelconque des revendications 2 à 4, caractérisée par le fait que les moyens d'articulation (19, 20) des pièces (17, 18), selon le cas, au bras support (9) ou à la structure support (12) sont définis par des chapes (33, 34) s'étendant depuis le fond (30, 31) des parties tubulaires (24, 25) et portant un axe (38) sur lequel est montée pivotante l'extrémité (14) du bras support (9) ou une patte à oeillet (39) rapportée sur la structure support (12) de l'organe directeur (5).

6. Suspension selon l'une quelconque des revendications précédentes, caractérisée par le fait qu'un essieu (2, 3) est fixé sur le bras support (9), plus particulièrement par l'intermédiaire d'une bride (42), à une distance (41) de l'extrémité pivotante (10) dudit bras support (9) déterminée en fonction de l'amplitude du débattement apte à être conférée à la roue.

## Patentansprüche

1. Radaufhängung (8) für Anhänger (1) mit Treibachsen (2, 3) für den Transport von schweren Lasten, umfassend einen sich zum Vorder- oder zum Hinterteil des Anhängers (1) hin erstreckenden Achsentragarm (9), wobei dieser Arm (9), einerseits, an einem (10) seiner Enden schwenkbar auf einer gegen einer Tragstruktur (12) des Treiborgans (5) der Radachse (2, 3) angebrachten Deckplatte (11) montiert ist und, andererseits, über sein gegenüberliegendes Ende (14) mit Federungsmitteln (13) zusammenwirkt, die zwischen diesem Arm (9) und der genannten Tragstruktur (12) eingefügt sind, dadurch gekennzeichnet, daß, einerseits, die genannten Federungsmittel (13) aus einer spiralförmigen Feder (15) bestehen, die geeignet vorgesehen ist, ausschließlich in Kompression einzugreifen, unter dem Einfluß von Mitteln (16), die ihren Halt und ihre Führung sichern, und als zwei Teile (17, 18) ineinanderfügbarer Art ausgestaltet sind, während sie aber in der Lage sind, in Axialrichtung der Feder (15), gegen der Wirkung dieser letzten, in einander zu gleiten, wobei diese Teile (17, 18) schwenkbar um eine Achse (21, 22) parallel zur Radachse (2, 3) montiert sind, der eine (17) auf dem genannten Achsentragarm (9) und der andere (18) auf der genannten Tragstruktur (12), und, andererseits, eine Radachse (2, 3) so an einem Tragarm (9) befestigt ist, daß sie sich im wesentlichen auf der senkrechten Schwenkungsachse (40) des Treiborgans (5) dieser Radachse (2, 3) befindet.

2. Radaufhängung nach Anspruch 1, dadurch gekennzeichnet, daß die Teile (17, 18) ein Gehäuse (23) zur Aufnahme der Feder (15) bestimmen, um den Halt und die Führung zu sichern, wobei jeder dieser Teile (17, 18) einen durch einen Boden (30, 31) geschlossenen zylinderförmigen, rohrförmigen Abschnitt (24, 25) umfaßt, wobei einer von ihnen einen Außenquerschnitt (26) aufweist, der dem Innenquerschnitt (27) des anderen rohrförmigen Abschnitts (25) angepaßt ist, und der Innenquerschnitt (28) des rohrförmigen Abschnitts (24) ebenfalls dem Durchmesser (29) der spiralförmigen Feder (15) angepaßt ist.

3. Radaufhängung nach Anspruch 2, dadurch gekennzeichnet, daß die genannten Mittel (16) mit einem rohrförmigen Stützen (32) ergänzt sind, der sich axial vom Boden (30, 31) her und im rohrförmigen Abschnitt (24) und/oder (25) wenigstens eines der Teile (17, 18) erstreckt, wobei dieser rohrförmige Stützen (32) mit einem Außenquerschnitt bestimmt ist, der der Innenausnehmung der genannten spiralförmigen Feder (15) angepaßt ist.

4. Radaufhängung nach Anspruch 1, dadurch gekennzeichnet, daß die Teile (17, 18) einen rohrförmigen Abschnitt umfassen, wobei der eine einen Außenquerschnitt aufweist, der der Innenausnehmung der spiralförmigen Feder (15) angepaßt ist, während der andere rohrförmige Abschnitt, seinerseits, einen Querschnitt aufweist, der dem Innenquerschnitt des vorgehenden rohrförmigen Abschnitts angepaßt ist, wobei die spiralförmige Feder (15) an Stützseitenplatten anlehnt, die sich unterhalb jedes der rohrförmigen Abschnitte erstrecken.

5. Radaufhängung nach irgendeinem der Ansprüche 2 bis 4, dadurch gekennzeichnet, daß die Mittel (19, 20) zur gelenkigen Verbindung der Teile (17, 18), je nach dem Fall, mit dem Tragarm (9) bzw. der Tragstruktur (12) durch Deckplatten (33, 34) definiert werden, die sich vom Boden (30, 31) der rohrförmigen Abschnitte (24, 25) her erstrecken und einen Spindel (38) tragen, auf dem das Ende (14) des Tragarmes (9) oder ein gegen der Tragstruktur (12) des Treiborgans (5) angebrachtes Füßchen mit einer Öse (39) schwenkbar montiert ist.

6. Radaufhängung nach irgendeinem der vorgehenden Ansprüche, dadurch gekennzeichnet, daß eine Achse (2, 3) insbesondere über einen Bügel (42) am Tragarm (9) befestigt ist, auf einem Abstand (41) des schwenkbaren Endes (10) des genannten Tragarmes (9), der in Abhängigkeit von der Ausschlaggröße, die dem Rad vermittelt werden kann, bestimmt ist.

## Claims

1. Wheel suspension (8) for a trailer (1) with driving axles (2, 3) for the transport of heavy loads, comprising an axle-bearing arm (9) extending towards the front or the rear of the trailer (1), this arm (9), on the one hand, being mounted in a pivoting way, at its one end (10), onto a cover plate (11) inserted against a bearing structure (12) for the driving organ (5) of the axle (2, 3) and, on the other hand, co-operating, through its opposite end (14), with shock-absorbing means (13) interposed between this arm (9) and said bearing structure (12), characterised in that, on the one hand, said shock-absorbing means (13) consist of a helical spring (15) so designed as to be capable of acting exclusively in compression under the action of means (16) that ensure its hold and guiding and that are in the form of two parts (17, 18) fitting into each other while being capable of sliding in each other in the direction axial to the spring (15), against the action of the latter, these parts (17, 18) being mounted in a pivoting way about a spindle (21, 22) parallel to the axle (2, 3), one (17) on said axle-bearing arm (9) and the other one (18) on said bearing structure (12), and, on the other hand, an axle (2, 3) is fixed on a bearing arm (9) so as to be substantially located on the vertical axis of pivoting (40) of the driving organ (5) of this axle (2, 3).

2. Wheel suspension according to claim 1, characterised in that the parts (17, 18) define a casing (23) for receiving the spring (15), with a view to ensure its hold and guiding, each of these parts (17, 18) including a tubular portion (24, 25) of a cylindrical shape and closed by a bottom (30, 31), one (24) of them having an outer cross-section (26) adjusted to the inner one (27) of the other tubular portion (25), the inner cross-section (28) of the tubular portion (24) also being adjusted to the diameter (29) of the helical spring (15).

3. Wheel suspension according to claims 2, characterised in that said means (16) are completed with a tubular ferrule (32) axially extending from the bottom (30, 31) and inside the tubular portion (24) and/or (25) of at least one of the parts (17, 18), this tubular ferrule (32) being defined with an outer cross-section adjusted to the internal recess of said helical spring (15).

4. Wheel suspension according to claim 1, characterised in that the parts (17, 18) include a tubular portion, one having an outer cross-section adjusted to the internal recess of the helical spring (15), whereas the other tubular portion has, in turn, a cross-section adjusted to the inner one of the preceding tubular portion, the helical spring (15) resting on supporting side plates extending under each of the tubular portions.

5. Wheel suspension according to any of claims 2 to 4, characterised in that the means (19, 20) connecting in a hinged way the parts (17, 18), as the case may be, to the bearing arm (9) or to the bearing structure (12) are defined by cover plates (33, 34) extending from the bottom (30, 31) of the tubular portions (24, 25) and bearing a spindle (38) on which is mounted in a pivoting way, the end (14) of the bearing arm (9) or a lug with an eyelet (39) inserted against the bearing structure (12) of the driving organ (5).

6. Wheel suspension according to any of the preceding claims, characterised in that an axle (2, 3) is fixed to the bearing arm (9), in particular through a strap (42), at a distance (41) from the pivoting end (10) of said bearing arm (9) determined according to the magnitude of the range of spring movement that can be imparted to the wheel.
